# EUROPÄISCHE PATENTSCHRIFT

(11) **EP 1 326 768 B1**
(45) Veröffentlichungstag und Bekanntmachung des Hinweises auf die Patenterteilung: **07.04.2004**
(21) Anmeldenummer: 01992662.5
(22) Anmeldetag: 09.10.2001
(51) Int. Cl.: B60T 7/04

(54) **BREMSKRAFTVERSTÄRKER**
SERVO BRAKE
SERVOFREIN

(30) Priorität: 17.10.2000 DE 10051385
(43) Veröffentlichungstag der Anmeldung: 16.07.2003
(73) Patentinhaber: Lucas Automotive GmbH, 56070 Koblenz (DE)
(72) Erfinder: FREY, Karl-Heinz, 56112 Lahnstein (DE); ORTEL, Peter, 56323 Waldesch (DE); LAHUIS, Friedel, Günther, 56070 Koblenz (DE)
(74) Vertreter: Beyer, Andreas, Dr.
(86) Internationale Anmeldenummer: PCT/EP2001/011645
(87) Internationale Veröffentlichungsnummer: WO 2002/036399

(56) Entgegenhaltungen:
- WO-A-88/08801
- DE-A- 3 149 628
- DE-A- 19 752 076
- FR-A- 2 788 095

## Beschreibung

Die Erfindung betrifft einen Bremskraftverstärker mit einem Eingangsglied zur Betätigung des Bremskraftverstärkers, welches an seinem bremspedalseitigen Ende eine Aufnahmehülse für eine Betätigungsstange aufweist, wobei eine zumindest teilweise innerhalb der Aufnahmehülse angeordnete Federhülse mit einem sich im wesentlichen in axialer Richtung erstreckenden Federelement vorhanden ist, welches mit der Betätigungsstange zusammenwirkt, wenn diese in eine Rastposition bezüglich des Eingangsgliedes gebracht wird, und welches radial nach außen federelastisch betätigbar ist.

Aus der WO 00/07862 ist ein herkömmlicher Bremskraftverstärker bekannt. Ein Eingangsglied des Bremskraftverstärkers ist an seinem bremspedalseitigen Ende als mit einer Querbohrung versehene Gabel ausgebildet. Zur Kopplung eines Bremspedalhebels mit dem Eingangsglied wird der ebenfalls mit einer Querbohrung versehene Bremspedalhebel in die Gabel eingeführt und mittels eines Querbolzens mit der Gabel verbunden. Anschließend wird der Querbolzen gegen ein unbeabsichtigtes Herausfallen gesichert.

Aus der DE 33 07 888 A1 ist ein weiterer Bremskraftverstärker bekannt. Dieser Bremskraftverstärker besitzt eine Kraftübertragungsanordnung mit einem Eingangsglied, welches an seinem dem Bremspedal zugewandten Ende eine hülsenförmige Aufnahme für eine mittels des Bremspedals betätigbare Betätigungsstange aufweist. Der Mantel der hülsenförmigen Aufnahme des Eingangsgliedes ist mit einer Öffnung versehen, durch welche sich in radialer Richtung ein Federelement erstreckt. Das Federelement besitzt zwei in das Innere der hülsenförmigen Aufnahme ragende federnde Abschnitte sowie zwei die Aufnahme radial außen umgreifende Schenkel. Zur Kopplung der Betätigungsstange mit dem Eingangsglied wird die Betätigungsstange soweit in die hülsenförmige Aufnahme soweit in die hülsenförmige Aufnahme eingeschoben, bis die in das Innere der hülsenförmigen Aufnahme ragenden federnden Abschnitte in eine in Umfangsrichtung verlaufende Nut der Betätigungsstange einrasten.

Das freie, federnde Ende des Federelementes stellt einer axialen Kraftbeaufschlagung sowohl in als auch entgegen der Betätigungsrichtung des Bremskraftverstärkers jeweils im wesentlichen dieselbe Federkraft entgegen. Während bei einer axialen Kraftbeaufschlagung des freien Endes des Federelementes in Betätigungsrichtung aber eine vergleichsweise geringe Federkraft erwünscht ist, um die Betätigungsstange ohne großen Kraftaufwand in die Rastposition bringen zu können, wird bei einer axialen Kraftbeaufschlagung des freien Endes des Federelementes entgegen der Betätigungsrichtung hingegen eine vergleichsweise hohe Federkraft angestrebt, damit die Betätigungsstange nicht aus der Aufnahmehülse herausgezogen werden kann. Diesen Anforderungen vermag die Kraftübertragungsanordnung gemäß der DE 33 07 888 A1 nicht in vollem Maße zu genügen.

Aus der DE 198 43 316 A1 ist eine weitere, eine Mehrzahl von Federelementen aufweisende Kraftübertragungsgsanordnung bekannt. Die Kraftübertragungsanordnung umfaßt ein Eingangsglied, welches an einem seiner beiden Enden eine Aufnahmehülse für eine Betätigungsstange aufweist. Eine Federhülse mit mehreren, sich im wesentlichen in axialer Richtung erstreckenden Federelementen ist innerhalb der Aufnahmehülse derart angeordnet, daß die radial nach außen federelastisch betätigbaren Federelemente mit der Betätigungsstange zusammenwirken, wenn diese in eine Rastposition bezüglich des Eingangsgliedes gebracht wird.

Zur Anbindung der Federhülse an die Aufnahmehülse weist die Federhülse an ihrem der Betätigungsstange zugewandten Ende einen sich radial nach außen erstreckenden Kragen auf, welcher mit einer der Betätigungsstange zugewandten Stirnseite der Aufnahmehülse in Kraftübertragungsrichtung der Betätigungsstange zusammenwirkt. Um zu verhindern, daß sich die Federhülse von der Aufnahmehülse löst, wenn die Federhülse entgegen der Kraftübertragungsrichtung der Betätigungsstange mit einer Axialkraft beaufschlagt wird, besitzt die Federhülse in einem innerhalb der Aufnahmehülse angeordneten Abschnitt mehrere, sich radial nach außen erstreckende Fortsätze. Diese Fortsätze stützen sich an einer Stufe im Inneren der Aufnahmehülse ab, so daß die Federhülse sich von der Aufnahmehülse selbst dann nicht löst, wenn sie entgegen der Kraftübertragungsrichtung der Betätigungsstange mit einer Axialkraft beaufschlagt wird.

Zur Kopplung der Betätigungsstange mit dem Eingangsglied wird die Betätigungsstange so weit in die Aufnahmehülse eingeschoben, bis ein dem Eingangsglied zugewandter Kugelkopf der Betätigungsstange die Federelemente passiert hat und die Federelemente den Kugelkopf hintergreifen. Die den Kugelkopf hintergreifenden und entgegen der Betätigungsrichtung der Betätigungsstange mit dem Kugelkopf zusammenwirkenden Federelemente gewährleisten, daß eine entgegen der Betätigungsrichtung in die Betätigungsstange eingeleitete Kraft sich vom Kugelkopf auf die Federelemente und von den Federelementen auf die mit dem Eingangsglied verbundene Aufnahmehülse überträgt. Folglich ist die Betätigungsstange nicht nur in Betätigungsrichtung, sondern auch entgegen der Betätigungsrichtung zuverlässig mit dem Eingangsglied gekoppelt.

Nachteilig bei dem aus der DE 198 43 316 A1 bekannten Kraftübertragungsglied ist jedoch, daß die Anbindung der Federhülse an die Aufnahmehülse aufwendig und daher kostenintensiv ist. Dies hängt vor allem mit der Tatsache zusammen, daß zur Anbindung der Federhülse an die Aufnahmehülse ein Hinterschnitt im tiefsten Abschnitt der Aufnahmehülse angeordnet werden muß. Dieser Hinterschnitt dient der Ausbildung der Stufe, mit welcher die sich radial nach außen erstreckenden Fortsätze der Federhülse entgegen der Betätigungsrichtung der Betätigungsstange zusammenwirken.

Der Erfindung liegt die Aufgabe zugrunde, einen Bremskraftverstärker bereitzustellen, welcher eine verbesserte und insbesondere fertigungstechnisch einfacher realisierbare Anbindung der Federhülse an die Aufnahmehülse gewährleistet.

Diese Aufgabe ist bei einem Bremskraftverstärker der eingangs geschilderten Art dadurch gelöst, daß die Federhülse an ihrem bremspedalseitigen Ende einen sich radial nach außen erstreckenden Abschnitt aufweist, welcher mittels einer Umbördelung der Aufnahmehülse an dieser befestigt ist. Die Umbördelung gewährleistet, daß sowohl Kräfte, welche in Betätigungsrichtung, als auch Kräfte, welche entgegen der Betätigungsrichtung in die Federhülse eingeleitet werden, zuverlässig auf die Aufnahmehülse übertragen werden können. Weiterhin läßt sich die Umbördelung äußerst kostengünstig realisieren.

Der sich radial nach außen erstreckende Abschnitt der Federhülse ist vorzugsweise als umlaufender oder zumindest bereichsweise umlaufender Kragen ausgestaltet. Eine solche Ausgestaltung gewährleistet eine besonders zuverlässige Übertragung von in die Federhülse eingeleiteten Kräften auf die Aufnahmehülse.

Die Federhülse kann zwei oder mehr mit der Betätigungsstange zusammenwirkende Federelemente umfassen, welche die Betätigungsstange radial außen umgeben. Zweckmäßigerweise sind die einzelnen Federelemente durch sich im wesentlichen in axialer Richtung erstreckende Schlitze voneinander getrennt. Zur Einstellung der Rückstellkräfte der Federelemente können sich diese Schlitze an ihren der Federhülse zugewandten Enden in Umfangsrichtung der Federhülse verbreitern. Mit zunehmender Verbreiterung der Schlitze in Umfangsrichtung nehmen die Rückstellkräfte der Federelemente ab. Dies ist darauf zurückzuführen, daß die Stege, über welche die Federelemente mit der Federhülse verbunden sind, zunehmend dünner werden. Gemäß einer bevorzugten Ausführungsform der Erfindung sind die Verbreiterungen der Schlitze an ihren der Federhülse zugewandten Enden als kreisförmige Aussparungen ausgebildet. Die Schlitze münden folglich an ihren der Federhülse zugewandten Enden in kreisförmige Aussparungen. Durch den Durchmesser der kreisförmigen Aussparungen läßt sich wiederum Einfluß auf die Rückstellkräfte der Federelemente nehmen.

Gemäß einer bevorzugten Ausführungsform der Erfindung wirkt das Federelement z.B. über sein bezüglich der Aufnahmehülse radial nach außen federelastisch betätigbares freies Ende mit einer ersten Schrägfläche der Betätigungsstange zusammen. Diese Schrägfläche weist vorteilhafterweise eine in Betätigungsrichtung zunehmende radiale Erstreckung auf und ist vorzugsweise in axialer Richtung eben, d.h. nicht gekrümmt. Wenn die Betätigungsstange nun aus der Rastposition mit einer entgegen der Betätigungsrichtung wirkenden Zugkraft beaufschlagt wird, wird die Zugkraft über diese Schrägfläche der Betätigungsstange in axialer Richtung in das freie Ende des Federelementes eingeleitet. Die in das Federelement eingeleitete Axialkraft wiederum wird von diesem in die Aufnahmehülse bzw. in das Eingangsglied eingeleitet.

Vorzugsweise ist die erste Schrägfläche der Betätigungsstange bezüglich des Federelementes derart geneigt angeordnet, daß das freie Ende des Federelementes in der Rastposition ungefähr senkrecht in die erste Schrägfläche mündet. Bei einer derartigen Anordnung von erster Schrägfläche und Federelement ist die Krafteinleitung von der ersten Schrägfläche in das Federelement optimal.

Die Betätigungsstange kann in Betätigungsrichtung vor der ersten Schrägfläche eine weitere, zweite Schrägfläche aufweisen, welche derart geneigt ist, daß durch die erste und die zweite Schrägfläche ein kerbenartiges Profil ausgebildet wird. Vorzugsweise ist die zweite Schrägfläche bezüglich des Federelementes derart angeordnet, daß das Federelement sich in der Rastposition zumindest bereichsweise in flächigem Kontakt mit der zweiten Schrägfläche der Betätigungsstange befindet. Weiterhin kann die Betätigungsstange in Betätigungsrichtung hinter der ersten Schrägfläche eine dritte Schrägfläche mit in Betätigungsrichtung abnehmender radialer Erstreckung aufweisen. Beim Einführen der Betätigungsstange in die Rastposition erfolgt vorteilhafterweise ein Zusammenwirken der dritten Schrägfläche mit dem Federelement.

Vorzugsweise ist zumindest eine der Schrägflächen der Betätigungsstange als konischer Abschnitt ausgebildet. Eine derartige, rotationssymmetrische Ausbildung der Schrägflächen ist vorteilhaft, da die Betätigungsstange dann in jeder beliebigen Winkelposition bezüglich einer Längsachse der Betätigungsstange in die Aufnahmehülse des Eingangsgliedes eingeführt werden kann.

Es können zwei oder mehr mit der Betätigungsstange zusammenwirkende Federelemente vorhanden sein, welche in ihrer Gesamtheit die Betätigungsstange radial außen in Gestalt eines Hohlzylinders oder Hohlzylinderabschnittes konzentrisch umgeben. Durch eine Mehrzahl von Federelementen lassen sich Kräfte gleichmäßiger von den Federelementen in die Betätigungsstange bzw. von der Betätigungsstange in die Federelemente einleiten.

Die Federelemente können beispielsweise als fingerartige Streifen einstückig mit der z. B. hohlzylindrischen Federhülse ausgebildet sein. Die Federhülse erstreckt sich vorzugsweise parallel zur Aufnahmehülse und liegt radial innen an dieser an. Die Federelemente können sich an die Federhülse in Betätigungsrichtung als radial nach innen gekröpfte Streifen anschließen. Der durch die freien Enden dieser nach innen gekröpften Streifen definierte Innendurchmesser ist demzufolge kleiner als der Innendurchmesser der hohlzylindrischen Federhülse.

An ihrem dem Bremspedal zugewandten Ende kann die Aufnahmehülse mit einer trichterförmigen Innendurchmessererweiterung versehen sein. Eine derartige Ausgestaltung des dem Bremspedal zugewandten Endes der Aufnahmehülse gewährleistet ein einfaches Herstellen der Rastverbindung zwischen Betätigungsstange und Eingangsglied auch dann, wenn beim Einführen der Betätigungsstange in die Aufnahmehülse die Betätigungsstange außermittig angeordnet sein sollte.

Die trichterförmige Innendurchmessererweiterung der Aufnahmehülse kann beispielsweise durch Befestigung eines trichterförmigen Bauteiles an dem bremspedalseitigen Ende der Aufnahmehülse realisiert werden. Die Aufnahmehülse kann radial außen eine in Umfangsrichtung verlaufende Nut aufweisen, in welche zur Befestigung des trichterförmigen Bauteiles eine radial innen am trichterförmigen Bauteil angeordnete, in Umfangsrichtung verlaufende Rippe rastend eingeführt werden kann. Umgekehrt kann auch die Aufnahmehülse radial außen mit einer Rippe und das trichterförmige Bauteil radial innen mit einer korrespondierende Nut versehen sein.

Gemäß einer bevorzugten Ausführungsform der Erfindung ist ein z. B. bezüglich der Betätigungsstange radial außen angeordnetes und bezüglich der Betätigungsstange in axialer Richtung bewegliches Betätigungselement zur Betätigung des mindestens einen Federelements vorhanden. Mittels des Betätigungselements kann jedes Federelement der Federhülse radial nach außen geschwenkt werden, um derart die auf die Federelemente zurückgehende Kopplung der Betätigungsstange entgegen der Betätigungsrichtung mit dem Eingangsglied zu lösen.

Das Betätigungselement kann einen sich in die Federhülse erstreckenden Abschnitt aufweisen, welcher mit dem mindestens einen Federelement zusammenwirkt. Weiterhin kann das Betätigungselement radial außen mit einer Stufe versehen sein, welche mit einer der Stufe zugewandten Stirnfläche der Aufnahmehülse zusammenwirkt, um die axiale Beweglichkeit des Betätigungselements zu begrenzen. Das Betätigungselement ist vorzugsweise als auf der Betätigungsstange geführte Hülse ausgestaltet und kann mittels einer Schraubverbindung mit der Betätigungsstange gekoppelt sein. Die Schraubverbindung gestattet eine axiale Relativbewegung zwischen Betätigungselement und Betätigungsstange.

Ein bevorzugtes Ausführungsbeispiel eines erfindungsgemäßen Bremskraftverstärkers wird im folgenden anhand der beigefügten schematischen Zeichnungen näher erläutert. Es zeigt:
- Fig. 1: einen Längsschnitt durch den interessierenden Bereich eines ersten erfindungsgemäßen Bremskraftverstärkers mit in einer Aufnahmehülse eingerasteter Betätigungsstange,
- Fign. 2 u. 2A: einen vergrößerten Längsschnitt durch das Eingangsglied des Bremskraftverstärkers gemäß Fig. 1,
- Fig. 3: einen Längsschnitt gemäß Fig. 2, welcher die Betätigungsstange in einer Rastposition bezügliche des Eingangsglieds zeigt,
- Fig. 4: einen Längsschnitt durch eine gegenüber der in den Fig. 1 bis 3 dargestellten Federhülse leicht abgewandelte Federhülse und
- Fig. 5: einen Längsschnitt durch eine Betätigungsstange mit aufgeschraubtem Betätigungselement in einer Rastposition bezüglich des Eingangsglieds.

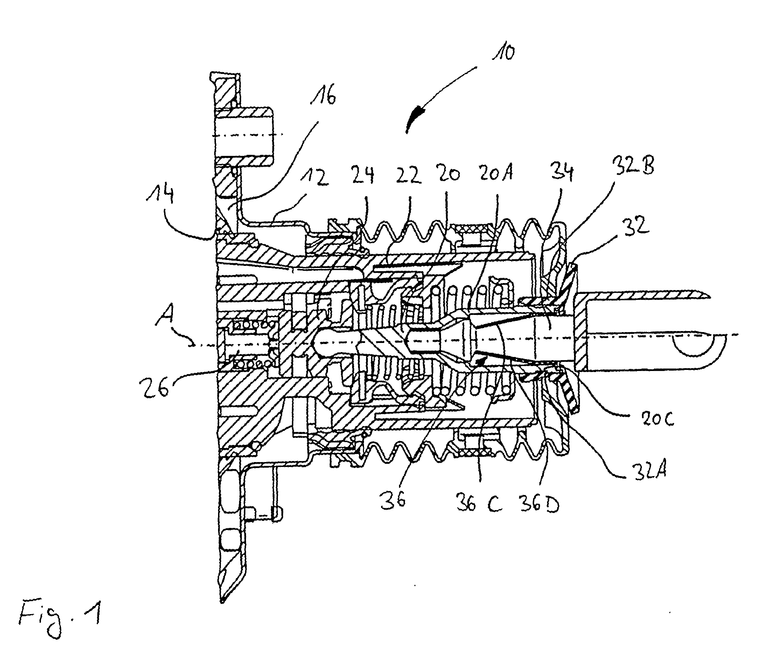

In Fig. 1 ist ein Unterdruckbremskraftverstärker 10 mit einem Gehäuse 12 und einer innerhalb des Gehäuses 12 angeordneten beweglichen Wand 14 gezeigt. Die bewegliche Wand 14 trennt eine Arbeitskammer 16 von einer nicht dargestellten Unterdruckkammer. Der Bremskraftverstärker 10 wird mittels eines stangenförmigen Eingangsgliedes 20 betätigt, welches längs einer Achse A in ein Steuerventilgehäuse 22 ragt. Mit seinem der Arbeitskammer 16 zugewandten und kugelförmig ausgeführten Ende ragt das Eingangsglied 20 in eine zentrale Öffnung eines Übertragungskolbens 24.

Die in Betätigungsrichtung in das Eingangsglied 20 eingeleiteten und vom Fahrer aufgebrachten Betätigungskräfte werden über den Betätigungskolben 24 und ein dem Betätigungskolben 24 in Betätigungsrichtung nachfolgendes zylindrisches Fühlelement 26 in eine nicht dargestellte Reaktionsscheibe 28 übertragen, welche die in das Eingangsglied 20 eingeleiteten Betätigungkräfte und die in das Steuerventilgehäuse 22 eingeleiteten Verstärkerkräfte zusammenführt und sie an einen ebenfalls nicht dargestellten Reaktionskolben weitergibt. Dem Reaktionskolben ist in bekannter Weise ein Hauptbremszylinder funktionell nachgeschaltet.

Das Eingangsglied 20 ist in dem in Fig. 1 dargestellten Ausführungsbeispiel einstückig mit einer dem Eingangsglied 20 in Betätigungsrichtung vorgelagerten Aufnahmehülse 20A ausgebildet. An ihrem dem nicht dargestellten Bremspedal zugewandten Ende ist radial außen ein trichterförmiges Bauteil 32 mit der Aufnahmehülse 20A verbunden. Das trichterförmige Bauteil 32 weist einen sich in Betätigungsrichtung konisch verjüngenden Innendurchmesser auf und erleichtert das Einführen einer mit dem Bremspedal gekoppelten Betätigungsstange 34 in die Aufnahmehülse 20A.

Wie Fig. 1 entnommen werden kann, weist die Aufnahmehülse 20A an ihrem bremspedalseitigen Ende radial außen eine in Umfangsrichtung verlaufende Nut 20C auf. Das trichterförmige Bauteil 32 besitzt einen sich in Betätigungsrichtung erstreckenden Kragen 32B, welcher radial innen mit einer in Umfangsrichtung verlaufende Rippe 32A versehen ist. Zur Befestigung des trichterförmigen Bauteiles 32 an der Aufnahmehülse 20A wird der Kragen 32B des trichterförmigen Bauteiles 32, dessen Innendurchmesser im wesentlichen dem Außendurchmesser der Aufnahmehülse 20A entspricht, auf die Aufnahmehülse 20A geschoben, bis die Rippe 32A in die umlaufende Nut 20C der Aufnahmehülse 20A einrastet.

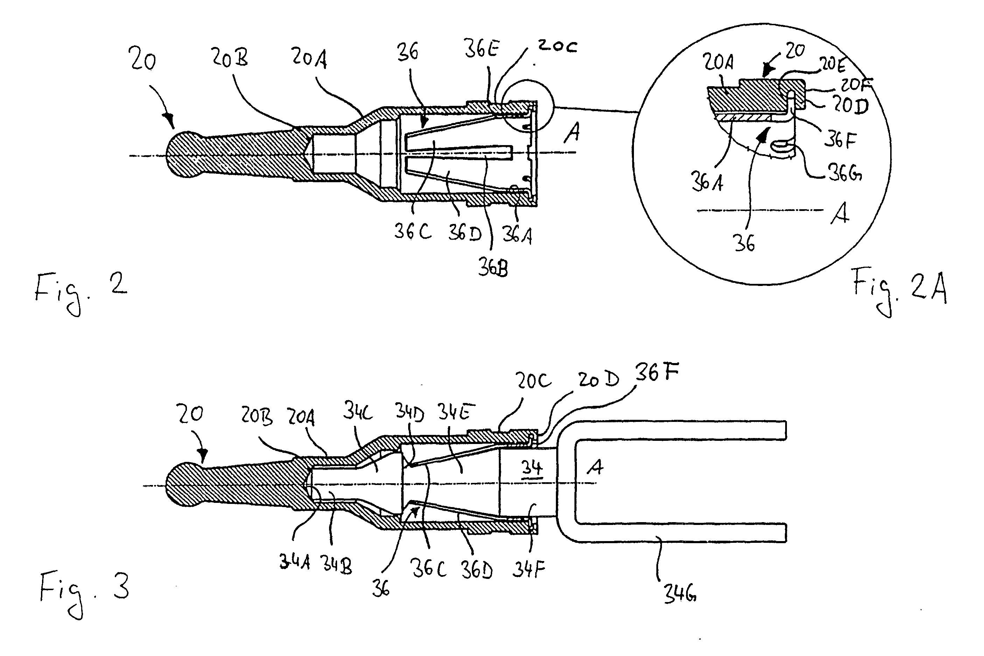

Bei dem in Fig. 1 dargestellten Bremskraftverstärker 10 ist dieser bereits fertig montiert. Die Betätigungsstange 34 befindet sich demzufolge in einer Rastposition bezüglich des Eingangsgliedes 20. Nachfolgend wird unter Bezugnahme auf die Fign. 2, 2A und 3 das Koppeln der Betätigungsstange 34 mit dem Eingangsglied 20 und die Anbindung einer Federhülse 36 an die Aufnahmehülse 20A beschrieben.

Wie Fig. 2A entnommen werden kann, weist die Federhülse 36 an ihrem bremspedalseitigen Ende einen hohlzylindrischen Abschnitt 36A und einen sich daran anschließenden und sich radial nach außen erstreckenden Kragen 36F auf. Dieser Kragen ist in Umfangsrichtung nicht ununterbrochen ausgebildet, sondern weist eine Reihe von schlitzartigen Aussparungen 36G auf.

Zur Befestigung der Federhülse 36 am Eingangsglied 20 wird die Federhülse 36 zunächst derart in Betätigungsrichtung des Bremskraftverstärkers in die Aufnahmehülse 20A eingeführt, daß der Kragen 36F der Federhülse 36 in Anlage an eine am bremspedalseitigen Ende der Aufnahmehülse 20A ausgebildete Stufe 20E gelangt. Anschließend wird durch Umbördeln eines sich in seiner Ausgangsposition parallel zur Längsachse A erstreckenden hohlzylindrischen Fortsatzes 20D der Aufnahmehülse 20A die Federhülse 36 mit der Aufnahmehülse 20A verbunden. Der Kragen 36F der Federhülse 36 ist dann gemäß Fig. 2A zwischen der Stufe 20E und dem umbördelten, sich senkrecht zur Längsachse A erstreckenden Fortsatz 20D der Aufnahmehülse 20A angeordnet.

Die aus einem federelastischen Blech geformte Federhülse 36 weist gemäß Fig. 2 eine Mehrzahl von Federelementen 36C, 36D auf, welche sich in Betätigungsrichtung an den hohlzylindrischen Abschnitt 36A der Federhülse 36 anschließen. Zwei dieser Federelemente 36C, 36D sind in Fig. 2 dargestellt. Die Federelemente 36C, 36D sind von einem Schlitz 36B getrennt und erstrecken sich im wesentlichen axial bezüglich einer Längsachse A. Eine im Übergangsbereich zwischen dem hohlzylindrischen Bereich 36B und den Federelementen 36C, 36D angeordnete Kröpfung 36E gewährleistet, daß sich die der Arbeitskammer 16 zugewandten freien Enden der Federelemente 36C, 36D bezüglich der Längsachse A radial nach innen erstrecken. Die Federelemente 36C, 36D weisen eine sich in Betätigungsrichtung verjüngende Breite auf.

Die Aufnahmehülse 20A des Eingangsgliedes 20 weist einen sich in Betätigungsrichtung stufenförmig verjüngenden Innendurchmesser auf und die Betätigungsstange 34 besitzt gemäß Fig. 3 einen korrespondierenden, sich in Betätigungsrichtung verjüngenden Außendurchmesser. Wie Fig. 3 entnommen werden kann, weist die Betätigungsstange 34 an ihrem bremspedalseitigen Ende einen gabelförmigen Fortsatz 34G zur Kopplung der Betätigungsstange 34 mit dem Bremspedal auf. Ein der Arbeitskammer 16 zugewandtes Ende der Betätigungsstange 34 weist eine kugelförmige Kraftübertragungsfläche 34A auf. Diese kugelförmige Kraftübertragungsfläche 34A wirkt in Betätigungsrichtung mit einem korrespondierenden Abschnitt 20B der Aufnahmehülse 20A zusammen, welcher einen sich in Betätigungsrichtung konisch verjüngenden Innendurchmesser besitzt.
Die kugelförmig ausgestaltete Kraftübertragungsfläche 34A mündet entgegen der Betätigungsrichtung in einen zylindrischen Abschnitt 34B der Betätigungsstange 34. Der zylindrische Abschnitt 34B wiederum geht entgegen der Betätigungsrichtung in einen konischen Abschnitt 34C mit entgegen der Betätigungsrichtung zunehmender axialer Erstreckung über. An diesen konischen Abschnitt 34C schließt sich entgegen der Betätigungsrichtung ein weiterer konischer Abschnitt 34D mit entgegen der Betätigungsrichtung abnehmender radialer Erstreckung an. Dem konischen Abschnitt 34D folgt entgegen der Betätigungsrichtung ein weiterer konischer Abschnitt 34E mit entgegen der Betätigungsrichtung zunehmender radialer Erstreckung. An diesen weiteren konischen Abschnitt 34E schließt sich entgegen der Betätigungsrichtung schließlich ein zylindrischer Abschnitt 34F an, dessen Durchmesser größer als der Durchmesser des ihm in Betätigungsrichtung vorgelagerten zylindrischen Abschnitts 34B ist.

Die beiden konischen Abschnitte 34D und 34E bilden ein asymmetrisches, kerbenförmiges Profil aus. Die Asymmetrie ist dadurch bedingt, daß der konische Abschnitt 34D eine größere Neigung aufweist als der ihm in Betätigungsrichtung nachfolgende konische Abschnitt 34E.

In Fig. 3 ist das Eingangsglied 20 mit vollständig in die Aufnahmehülse 20A eingeführter Betätigungsstange 34 dargestellt. Beim Einführen der Betätigungsstange 34 in die Aufnahmehülse 20A des Eingangsgliedes 20 werden zunächst von der kugelförmigen Kraftübertragungsfläche 34A der Betätigungsstange 34 die Federelemente 36C, 36D elastisch radial nach außen gebogen. Diese Verformung der Federelemente 36C, 36D radial nach außen setzt sich solange fort, bis der konische Abschnitt 34C die Federelemente 36C, 36D in Betätigungsrichtung passiert hat. Anschließend rasten die Federelemente 36C, 36D in das durch die konischen Abschnitte 34D und 34E der Betätigungsstange 34 gebildete, kerbenförmige Profil ein. Die Betätigungsstange 34 gelangt, wie in Fig. 3 dargestellt, in eine Rastposition.

In der in Fig. 3 dargestellten Rastposition münden die freien Enden der Federlemente 36C, 36D in Betätigungsrichtung unter einem annähernd rechten Winkel in den konischen Abschnitt 34D der Betätigungsstange 34. Sofern nun auf die Betätigungsstange 34 entgegen der Betätigungsrichtung Zugkräfte ausgeübt werden, werden diese Zugkräfte über den konischen Abschnitt 34D axial in die freien Enden der Federelemente 36C, 36D eingeleitet. Die derart in die Federelemente 36C, 36D eingeleiteten Axialkräfte wiederum werden aufgrund der starren Anbindung der Federhülse 36 an die Aufnahmehülse 20A auf diese übertragen. Folglich ist die Betätigungsstange 34 sicher gegen ein Herausziehen verriegelt.

Die Neigung des in Betätigungsrichtung ersten konischen Abschnittes 34E der Betätigungsstange 34 wurde derart gewählt, daß sich die Federelemente 36C, 36D in der Rastposition in annähernd ganzflächiger Anlage an den konischen Abschnitt 34E befinden.

Die Neigung des konischen Abschnittes 34D wurde derart gewählt, daß unter allen Umständen eine spielfreie Anlage der Kraftübertragungsfläche 34A an den Grund der Aufnahmehülse 20A gewährleistet ist. Je nach der aufgrund von Bauteiltoleranzen geringfügig unterschiedlichen Länge der Federelemente 36C, 36D können diese nämlich an unterschiedlichen Stellen des konischen Abschnittes 34D abstützend mit diesem in Anlage gelangen, wobei stets eine annähernd rechtwinklige Krafteinleitung von der konischen Fläche 34 in jedes der Federelemente 36C, 36D gewährleistet ist. Somit entwickeln die Federelemente 36C, 36D an jeder Anlagestelle des konischen Abschnittes 34D Abstützkräfte, welche ein Herausziehen der Betätigungsstange 34 aus der Aufnahmehülse 20A definiert behindern.

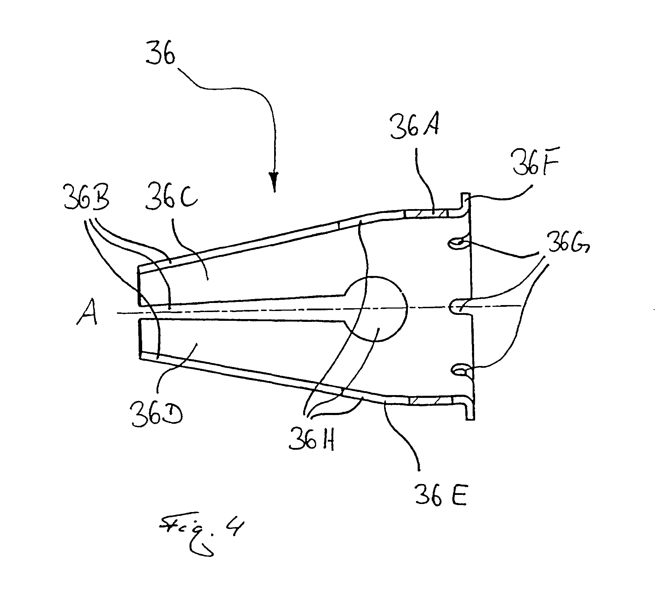

In Fig. 4 ist eine weitere Möglichkeit zur Ausgestaltung der Federhülse 36 dargestellt. Die dargestellte Federhülse 36 kann sowohl bei dem erfindungsgemäßen Bremskraftverstärker als auch bei anderen Bremskraftverstärkern oder Kraftübertragungsanordnungen zum Einsatz gelangen.

Die in Fig. 4 dargestellte Federhülse 36 stimmt im wesentlichen mit der in Fig. 2 dargestellten Federhülse überein. So besitzt auch die in Fig. 4 dargestellte Federhülse 36 einen hohlzylindrischen Abschnitt 36A und insgesamt vier, sich in Betätigungsrichtung an den hohlzylindrischen Abschnitt 36A anschließende Federelemente, von denen zwei Federelemente 36C, 36D dargestellt sind. Benachbarte Federelemente 36C, 36D werden durch jeweils einen sich in axialer Richtung erstreckenden Schlitz getrennt. Von den vier Schlitzen sind drei Schlitze 36B in Fig. 4 dargestellt.

An seinem dem hohlzylindrischen Abschnitt 36A zugewandten Ende mündet jeder Schlitz 36B in eine kreisförmige Aussparung 36H. Die Rückstellkräfte der Federelemente 36C, 36D lassen sich durch Variation des Durchmessers der kreisförmigen Aussparungen 36H einstellen. Obwohl die Aussparungen 36H, in welche die Schlitze 36B münden, prinzipiell auch eine von der Kreisform abweichende Form aufweisen können, ist die Kreisform besonders vorteilhaft zur Reduzierung von Kerbspannungen.

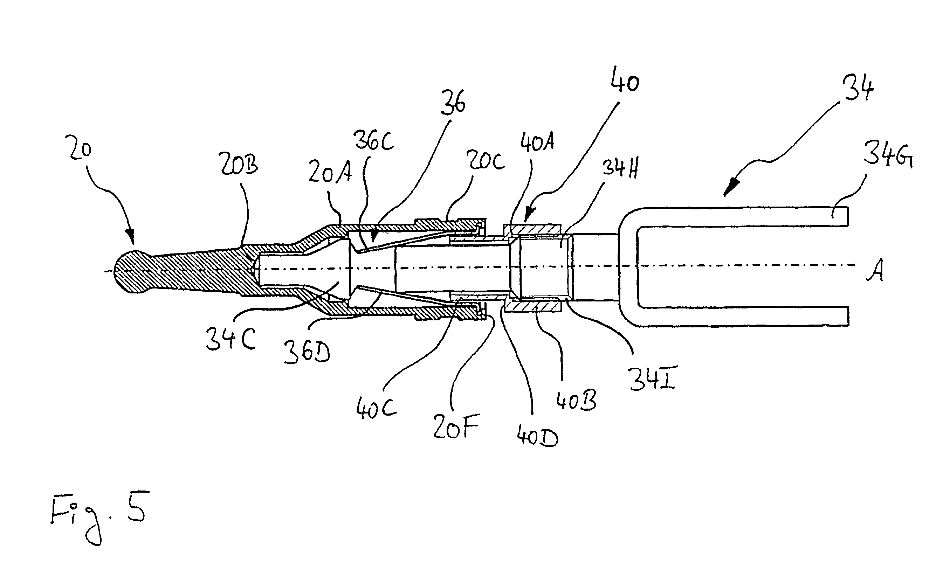

In Fig. 5 ist die aus Fig. 3 bekannte Kraftübertragungsanordnung mit einem zusätzlichen Betätigungselement 40 für die Federelemente 36C, 36D dargestellt. Das Betätigungselement 40 gestattet das Lösen der Betätigungsstange 34 aus der in den Fign. 3 und 5 dargestellten Rastposition und kann auch bei einem anderen als dem erfindungsgemäßen Bremskraftverstärker zum Einsatz gelangen.

Das Betätigungselement 40 ist als gestufte, hohlzylindrische Hülse ausgestaltet und auf eine Durchmessererweiterung 34H mit einem Gewindeabschnitt 34I der Betätigungsstange 34 aufgeschraubt. Das Betätigungselement 40 besitzt hierzu radial innen an seinem dem Bremspedal zugewandten Ende einen komplementären Gewindeabschnitt 40A. Die Schraubverbindung zwischen dem Betätigungselement 40 und der Betätigungsstange 34 ermöglicht eine axiale Relativbewegung zwischen dem Betätigungskolben 34 und dem Betätigungselement 40.

Das Gewinde 40A des Betätigungselements 40 ist an einem dem Bremspedal zugewandten, hinteren Abschnitt 40B des Betätigungselements 40 ausgebildet. Dieser, das Gewinde 40A tragende Abschnitt 40B weist eine geeignet strukturierte Außenkontur auf, welche es ermöglicht, das Betätigungselement 40 manuell oder mit Hilfe eines Werkzeugs zu drehen.

An den gewindetragenden Abschnitt 40B des Betätigungselements schließt sich in Betätigungsrichtung des Bremskraftverstärkers ein vorderer Abschnitt 40C mit geringerem Außendurchmesser und geringerem Innendurchmesser als der gewindetragende Abschnitt 40B an. Der vordere Abschnitt 40C des Betätigungselements 40 erstreckt sich in der Ausgangsstellung des Betätigungselements 40 teilweise in die Federhülse 36 hinein.

Um die Betätigungsstange 34 aus der in Fig. 5 dargestellten Rastposition zu lösen, d.h. um die Betätigungsstange 34 vom Eingangsglied 20 zu trennen, wird das Betätigungselement 40 aus seiner in Fig. 5 dargestellten Ausgangsstellung derart gedreht, daß es sich bezüglich der Betätigungsstange 34 in Betätigungsrichtung des Bremskraftverstärkers bewegt. Das Betätigungselement 40 führt somit in Fig. 5 eine Axialbewegung nach links durch. Infolge dieser Axialbewegung kontaktiert der vordere Abschnitt 40C des Betätigungselements 40 die Federelemente 36C, 36D der Federhülse 36. Aufgrund des Zusammenwirkens zwischen dem Betätigungselement 40 und den Federelementen 36C, 36D schwenken die Federelemente 36C, 36D radial nach außen.

Sobald die Federelemente 36C, 36D so weit radial nach außen geschwenkt sind, daß der kleinste Abstand gegenüberliegender Federelemente größer ist als der maximale Durchmesser des konischen Abschnitts 34C der Betätigungsstange 34, kann die Betätigungsstange 34 aus der Aufnahmehülse 20A herausgezogen werden. Das Herausziehen der Betätigungsstange 34 aus der Aufnahmehülse 20A geschieht wiederum mittels des Betätigungselements 40. Die axiale Länge des vorderen Abschnitts 40C des Betätigungselements 40 ist derart gewählt, daß die für das Herausziehen der Betätigungsstange 34 aus der Aufnahmehülse 20A erforderliche Aufdehnung der Federelemente 36C, 36D erreicht ist, bevor eine dem Eingangsglied 20 zugewandte Stufe 40D des Betätigungselements 40 eine dieser Stufe 40D zugewandte Stirnfläche 20F der Aufnahmehülse 20A kontaktiert. Die Stufe 40D ist am Übergang zwischen dem vorderen Abschnitt 40C und dem gewindetragenden Abschnitt 40B des Betätigungselements ausgebildet. Die Stirnfläche 20F wird, wie aus Fig. 2A ersichtlich, von einer Oberfläche des umbördelten Bereichs 20D der Aufnahmehülse 20A gebildet.

Sobald das Betätigungselement 40 so weit in die Federhülse 36 bzw. die Aufnahmehülse 20A eingetaucht ist, daß die Stufe 40D des Betätigungselements 40 die Stirnfläche 20F der Aufnahmehülse 20A kontaktiert, bewirkt eine weitere Drehung des Betätigungselements 40, daß die Betätigungsstange 34 aus der Federhülse 36 herausgezogen wird. Dies ist darauf zurückzuführen, daß sich das Betätigungselement 40 zum einen über seine Stufe 40D an der Stirnfläche 20F der Aufnahmehülse 20A abstützt und zum anderen die Betätigungsstange 34 aufgrund der Drehung des Betätigungselements 40 eine axiale Bewegung relativ zum Betätigungselement 40 entgegen der Betätigungsrichtung des Bremskraftverstärkers durchführt.

Die erfindungsgemäße Verbindung von Betätigungsstange und Eingangsglied läßt sich bei allen Arten von Bremskraftverstärkern und insbesondere auch bei hydraulischen Bremskraftverstärkern realisieren.

## Patentansprüche

1. Bremskraftverstärker (10) mit
- einem Eingangsglied (20) zur Betätigung des Bremskraftverstärkers (10), welches an einem bremspedalseitigen Ende eine Aufnahmehülse (20A) für eine mit dem Bremspedal zu koppelnde Betätigungsstange (34) aufweist, und
- einer zumindest teilweise innerhalb der Aufnahmehülse (20A) angeordneten Federhülse (36) mit mindestens einem Federelement (36C, 36D), welches mit der Betätigungsstange (34) zusammenwirkt, wenn diese in eine Rastposition bezüglich des Eingangsgliedes (20) gebracht wird, wobei sich das Federelement (36C, 36D) im wesentlichen in axialer Richtung erstreckt und radial nach außen federelastisch betätigbar ist,
**dadurch gekennzeichnet, daß** die Federhülse (36) an ihrem bremspedalseitigen Ende einen sich radial nach außen erstreckenden Abschnitt (36F) aufweist, welcher mittels einer Umbördelung (20D) der Aufnahmehülse (20A) an der Aufnahmehülse (20A) befestigt ist.

2. Bremskraftverstärker nach Anspruch 1,
**dadurch gekennzeichnet, daß** der sich radial nach außen erstreckende Abschnitt der Federhülse (36) als Kragen (36F) ausgebildet ist.

3. Bremskraftverstärker nach Anspruch 1 oder 2,
**dadurch gekennzeichnet, daß** die Federhülse (36) zwei oder mehr Federelemente (36C, 36D) umfaßt, welche die Betätigungsstange (34) radial außen umgeben.

4. Bremskraftverstärker nach Anspruch 3,
**dadurch gekennzeichnet, daß** jeweils zwei in Umfangsrichtung der Betätigungsstange (34) benachbarte Federelemente (36C, 36D) durch jeweils einen sich im wesentlichen in axialer Richtung erstreckenden Schlitz (36B) voneinander getrennt sind.

5. Bremskraftverstärker nach Anspruch 4,
**dadurch gekennzeichnet, daß** jeder Schlitz (36B) an seinem bremspedalseitigen Ende in eine in Umfangsrichtung der Federhülse (36) verlaufende Verbreiterung (36H) mündet.

6. Bremskraftverstärker nach Anspruch 5,
**dadurch gekennzeichnet, daß** jeder Schlitz (36B) an seinem bremspedalseitigen Ende in eine kreisförmige Aussparung (36H) mündet.

7. Bremskraftverstärker nach einem der Ansprüche 1 bis 6,
**dadurch gekennzeichnet, daß** ein in Betätigungsrichtung des Bremskraftverstärkers (10) vorderes, freies Ende des Federelementes (36C, 36D) federelastisch betätigbar ist.

8. Bremskraftverstärker nach einem der Ansprüche 1 bis 7,
**dadurch gekennzeichnet, daß** das Federelement (36C, 36D), vorzugsweise über dessen freies Ende, entgegen der Betätigungsrichtung des Bremskraftverstärkers (10) mit einer ersten Schrägfläche (34D) der Betätigungsstange (34) zusammenwirkt.

9. Bremskraftverstärker nach Anspruch 8,
**dadurch gekennzeichnet, daß** das freie Ende des Federelementes (36C, 36D) ungefähr senkrecht in die erste Schrägfläche (34D) mündet.

10. Bremskraftverstärker nach Anspruch 8 oder 9,
**dadurch gekennzeichnet, daß** die Betätigungsstange (34) in Betätigungsrichtung vor der ersten Schrägfläche (34D) eine zweite Schrägfläche (34E) aufweist, welche derart geneigt ist, daß die erste Schrägfläche (34D) und die zweite Schrägfläche (34E) zusammen ein kerbenförmiges Profil ausbilden.

11. Bremskraftverstärker nach Anspruch 10,
**dadurch gekennzeichnet, daß** das Federelement (36C, 36D) sich in der Rastposition zumindest bereichsweise in flächigem Kontakt mit der zweiten Schrägfläche (34E) der Betätigungsstange (34) befindet.

12. Bremskraftverstärker nach einem der Ansprüche 8 bis 11,
**dadurch gekennzeichnet, daß** die Betätigungsstange (34) in Betätigungsrichtung hinter der ersten Schrägfläche (34D) eine dritte Schrägfläche (34C) mit in Betätigungsrichtung abnehmender radialer Erstreckung aufweist, welche beim Einführen der Betätigungsstange (34) in die Rastposition mit dem Federelement (36C, 36D) zusammenwirkt.

13. Bremskraftverstärker nach einem der Ansprüche 8 bis 12,
**dadurch gekennzeichnet, daß** wenigstens eine der Schrägflächen (34C, 34D, 34E) der Betätigungsstange (34) als konischer Abschnitt ausgestaltet ist.

14. Bremskraftverstärker nach einem der Ansprüche 1 bis 13,
**dadurch gekennzeichnet, daß** die Aufnahmehülse (20A) an ihrem bremspedalseitigen Ende trichterförmig mit in Betätigungsrichtung abnehmendem Innendurchmesser ausgestaltet ist.

15. Bremskraftverstärker nach Anspruch 14,
**dadurch gekennzeichnet, daß** die Aufnahmehülse (20A) an ihrem bremspedalseitigen Ende ein trichterförmiges Bauteil (32) aufweist.

16. Bremskraftverstärker nach Anspruch 15,
**dadurch gekennzeichnet, daß** zur Befestigung des trichterförmigen Bauteiles (32) an der Aufnahmehülse (20A) eine in Umfangsrichtung verlaufende Rippe (32A) eines dieser Bauteile (20A, 32) in eine in Umfangsrichtung verlaufende Nut (20C) des anderen Bauteiles (20A, 32) eingeführt ist.

17. Bremskraftverstärker nach einem der Ansprüche 1 bis 16,
**dadurch gekennzeichnet, daß** ein bezüglich der Betätigungsstange (34) in axialer Richtung bewegliches Betätigungselement (40) zur Betätigung des mindestens einen Federelements (36C, 36D) vorhanden ist.

18. Bremskraftverstärker nach Anspruch 17,
**dadurch gekennzeichnet, daß** das Betätigungselement (40) einen sich in die Federhülse (36) erstreckenden Abschnitt (40C) aufweist.

19. Bremskraftverstärker nach einem der Ansprüche 17 oder 18,
**dadurch gekennzeichnet, daß** das Betätigungselement (40) radial außen eine Stufe (40D) aufweist, welche mit einer der Stufe (40D) zugewandten Stirnfläche (20F) der Aufnahmehülse (20A) zusammenwirkt.

20. Bremskraftverstärker nach einem der Ansprüche 17 bis 19,
**dadurch gekennzeichnet, daß** das Betätigungselement (40) hülsenförmig ausgestaltet ist.

21. Bremskraftverstärker nach einem der Ansprüche 17 bis 20,
**dadurch gekennzeichnet, daß** das Betätigungselement (40) mittels einer Schraubverbindung (40A, 34I) mit der Betätigungsstange (34) gekoppelt ist.

## Claims

1. Brake booster (10) comprising
- an input element (20) for actuating the brake booster (10), which input element at a brake pedal-side end has a receiving sleeve (20A) for an actuating rod (34), which is to be coupled to the brake pedal, and
- a spring sleeve (36) disposed at least partially inside the receiving sleeve (20A) and having at least one spring element (36C, 36D), which cooperates with the actuating rod (34) when the latter is brought into a detent position in relation to the input element (20), with the spring element (36C, 36D) extending substantially in axial direction and being adapted to be actuated in a spring-elastic manner in a radially outward direction,
**characterized in that** the spring sleeve (36) at its brake pedal-side end has a radially outwardly extending portion (36F), which is fastened by means of a bead (20D) of the receiving sleeve (20A) to the receiving sleeve (20A).

2. Brake booster according to claim 1,
**characterized in that** the radially outwardly extending portion of the spring sleeve (36) takes the form of a collar (36F).

3. Brake booster according to claim 1 or 2,
**characterized in that** the spring sleeve (36) comprises two or more spring elements (36C, 36D), which surround the radially outer side of the actuating rod (34).

4. Brake booster according to claim 3,
**characterized in that** each two spring elements (36C, 36D) adjacent in peripheral direction of the actuating rod (34) are separated from one another by, in each case, a slot (36B) extending substantially in axial direction.

5. Brake booster according to claim 4,
**characterized in that** each slot (36B) at its brake pedal-side end opens into a widened portion (36H) extending in peripheral direction of the spring sleeve (36).

6. Brake booster according to claim 5,
**characterized in that** each slot (36B) at its brake pedal-side end opens into a circular recess (36H).

7. Brake booster according to one of claims 1 to 6,
**characterized in that** an, in actuating direction of the brake booster (10), front free end of the spring element (36C, 36D) is actuable in a spring-elastic manner.

8. Brake booster according to one of claims 1 to 7,
**characterized in that** the spring element (36C, 36D) cooperates, preferably via its free end, counter to the actuating direction of the brake booster (10) with a first oblique face (34D) of the actuating rod (34).

9. Brake booster according to claim 8,
**characterized in that** the free end of the spring element (36C, 36D) opens approximately at right angles into the first oblique face (34D).

10. Brake booster according to claim 8 or 9,
**characterized in that** the actuating rod (34) has, in actuating direction upstream of the first oblique face (34D), a second oblique face (34E) which is inclined in such a way that the first oblique face (34D) and the second oblique face (34E) together form a notch-shaped profile.

11. Brake booster according to claim 10,
**characterized in that** the spring element (36C, 36D) in the detent position is situated at least in sections in surface contact with the second oblique face (34E) of the actuating rod (34).

12. Brake booster according to one of claims 8 to 11,
**characterized in that** the actuating rod (34) has, in actuating direction downstream of the first oblique face (34D), a third oblique face (34C), which has a radial extension decreasing in actuating direction and which during introduction of the actuating rod (34) into the detent position cooperates with the spring element (36C, 36D).

13. Brake booster according to one of claims 8 to 12,
**characterized in that** at least one of the oblique faces (34C, 34D, 34E) of the actuating rod (34) is designed as a conical portion.

14. Brake booster according to one of claims 1 to 13,
**characterized in that** the receiving sleeve (20A) at its brake pedal-side end is funnel-shaped with an inside diameter decreasing in actuating direction.

15. Brake booster according to claim 14,
**characterized in that** the receiving sleeve (20A) at its brake pedal-side end has a funnel-shaped component (32).

16. Brake booster according to claim 15,
**characterized in that**, for fastening the funnel-shaped component (32) to the receiving sleeve (20A), a peripherally extending rib (32A) of one of said components (20A, 32) is introduced into a peripherally extending groove (20C) of the other component (20A, 32).

17. Brake booster according to one of claims 1 to 16,
**characterized in that** an actuating element (40), which is movable in axial direction relative to the actuating rod (34), is provided for actuating the at least one spring element (36C, 36D).

18. Brake booster according to claim 17,
**characterized in that** the actuating element (40) has a portion (40C) extending into the spring sleeve (36).

19. Brake booster according to one of claims 17 or 18,
**characterized in that** the actuating element (40) radially at the outside has a step (40D), which cooperates with an end face (20F) of the receiving sleeve (20A) facing the step (40D).

20. Brake booster according to one of claims 17 to 19,
**characterized in that** the actuating element (40) is sleeve-shaped.

21. Brake booster according to one of claims 17 to 20,
**characterized in that** the actuating element (40) is coupled by means of a screw-type connection (40A, 34I) to the actuating rod (34).

## Revendications

1. Servofrein (10), comprenant
- un élément d'entrée (20) pour actionner le servofrein (10) qui comporte à une extrémité côté pédale de frein, une douille de logement (20A) pour recevoir une tige d'actionnement (34) à coupler avec la pédale de frein, et
- une douille élastique (36) disposée au moins en partie à l'intérieur de la douille de logement (20A), présentant au moins un élément élastique (36C, 36D) coopérant avec la tige d'actionnement (34) lorsque celle-ci est amenée dans une position d'encliquetage par rapport à l'élément d'entrée (20), l'élément élastique (36C, 36D) s'étendant essentiellement en direction axiale et est actionnable de manière élastique radialement vers l'extérieur,
**caractérisé en ce que** la douille élastique (36) comporte, à son extrémité du côté pédale de frein, une partie (36F) s'étendant radialement vers l'extérieur et fixée à la douille de logement (20A) par un rebord rabattu (20D) de la douille de logement (20A).

2. Servofrein selon la revendication 1, **caractérisé en ce que** la partie de la douille élastique (36) s'étendant radialement vers l'extérieur présente la forme d'un col (36F).

3. Servofrein selon la revendication 1 ou 2, **caractérisé en ce que** la douille élastique (36) comporte deux ou plusieurs éléments élastiques (36C, 36D) qui entourent radialement vers extérieur la tige d'actionnement (34).

4. Servofrein selon la revendication 3, **caractérisé en ce que** deux éléments élastiques (36C, 36D) voisins dans la direction périphérique de la tige d'actionnement (34) sont séparés chaque fois l'un de l'autre par une fente (36B) s'étendant essentiellement en direction axiale entre les éléments élastiques.

5. Servofrein selon la revendication 4, **caractérisé en ce que** l'extrémité de chaque fente (36B) côté pédale de frein débouche dans un élargissement (36H) s'étendant en direction périphérique de la douille élastique (36).

6. Servofrein selon la revendication 5, **caractérisé en ce que** l'extrémité de chaque fente (36B) côté pédale de frein débouche dans un évidement (36H) circulaire.

7. Servofrein selon l'une des revendications 1 à 6, **caractérisé en ce que** une extrémité libre avant, en direction d'actionnement du servofrein (10), de l'élément élastique (36C, 36D) est actionnable de façon élastique.

8. Servofrein selon l'une des revendications 1 à 7, **caractérisé en ce que** l'élément élastique (36C, 36D) coopère dans le sens opposé à la direction d'actionnement du servofrein (10), de préférence par son extrémité libre, avec une première face oblique (34D) de la tige d'actionnement (34).

9. Servofrein selon la revendication 8, **caractérisé en ce que** l'extrémité libre de l'élément élastique (36C, 36D) débouche environ verticalement dans la première face oblique (34D).

10. Servofrein selon la revendication 8 ou 9, **caractérisé en ce que** la tige d'actionnement (34) comprend une deuxième face oblique (34E) devant la première face oblique (34D), dans le sens de l'actionnement, qui présente une pente telle que la première face oblique (34D) et la deuxième face oblique (34E) forment ensemble un profil en forme d'encoche.

11. Servofrein selon la revendication 10, **caractérisé en ce qu'**au moins une partie de l'élément de ressort (36C, 36D) se trouve, lorsqu'il est en position encliquetée, en contact superficiel avec la deuxième face oblique (34E) de la tige d'actionnement (34).

12. Servofrein selon l'une des revendications 8 à 11, **caractérisé en ce que** la tige d'actionnement (34) comporte derrière la première face oblique (34D), dans le sens de l'actionnement, une troisième face oblique (34C) dont l'extension radiale décroît dans le sens de l'actionnement et qui coopère avec l'élément élastique (36C, 36D) lors de l'introduction de la tige d'actionnement (34) en position d'encliquetage.

13. Servofrein selon l'une des revendications 8 à 12, **caractérisé en ce qu'**au moins une des surfaces obliques (34C, 34D, 34E) de la tige d'actionnement (34) présente la forme de section conique.

14. Servofrein selon l'une des revendications 1 à 13, **caractérisé en ce que** l'extrémité côté pédale de frein de la douille de logement (20A) présente la forme d'un entonnoir dont le diamètre intérieur diminue dans la direction d'actionnement.

15. Servofrein selon la revendication 14, **caractérisé en ce que** l'extrémité côté pédale de frein de la douille de logement (20A) est dotée d'un élément en forme d'entonnoir (32).

16. Servofrein selon la revendication 15, **caractérisé en ce qu'**afin de fixer l'élément en forme d'entonnoir (32) à la douille de logement (20A), une nervure périphérique (32A), présente sur l'une de ces pièces (20A, 32), est insérée dans une rainure périphérique (20C) de l'autre pièce (20A, 32).

17. Servofrein selon l'une des revendications 1 à 16, **caractérisé en ce qu'**un élément d'actionnement (40), mobile en direction axiale par rapport à la tige d'actionnement (34), est prévu pour actionner ledit au moins un élément élastique (36C, 36D).

18. Servofrein selon la revendication 17, **caractérisé en ce que** l'élément d'actionnement (40) comporte une section (40C) s'étendant dans la douille élastique (36).

19. Servofrein selon l'une des revendications 17 ou 18, **caractérisé en ce que** l'élément d'actionnement (40) comporte un étage (40D) radial extérieur coopérant avec une face frontale (20F) de la douille de logement (20A) qui fait face à l'étage (40D).

20. Servofrein selon l'une des revendications 17 à 19, **caractérisé en ce que** l'élément d'actionnement (40) présente la forme d'une douille.

21. Servofrein selon l'une des revendications 17 à 20, **caractérisé en ce que** l'élément d'actionnement (40) est couplé à la tige d'actionnement (34) par l'intermédiaire d'un raccord à vis (40A, 34I).
